# EUROPÄISCHE PATENTSCHRIFT

(11) **EP 0 638 974 B1**
(45) Veröffentlichungstag und Bekanntmachung des Hinweises auf die Patenterteilung: **11.06.1997**
(21) Anmeldenummer: 94112367.1
(22) Anmeldetag: 08.08.1994
(51) Int. Cl.: H02G 15/013

(54) **Kabeleinführungsdichtung im Kabeleinführungsbereich einer Kabelgarnitur**
Cable inlet sealing in cable inlet area of a cable fitting
Etanchéité d'entrée de câble dans la zone d'entrée de câble d'un accessoire de câble

(30) Priorität: 11.08.1993 DE 4326973
(43) Veröffentlichungstag der Anmeldung: 15.02.1995
(73) Patentinhaber: SIEMENS AKTIENGESELLSCHAFT, 80333 München (DE)
(72) Erfinder: Kunze, Dieter, D-82061 Neuried (DE)

(56) Entgegenhaltungen:
- EP-A- 0 402 653
- WO-A-92/20077
- DE-A- 1 949 345
- DE-U- 7 607 339
- GB-A- 724 596
- US-A- 2 688 651
- US-A- 3 054 847
- US-A- 4 255 614

## Beschreibung

Die Erfindung betrifft eine Kabeleinführungsdichtung, bestehend aus einer Ringdichtung aus elastischem Material und einer dafür angepaßten Einführungsöffnung im Kabeleinführungsbereich einer Kabelgarnitur, wobei die Kabeleinführungsöffnung konisch zulaufend ausgebildet ist, die Ringdichtung zumindest auf der Außenseite dem konischen Verlauf der Kabeleinführungsöffnung angepaßt ist, und am weiten Ende der Kabeleinführungsöffnung ein für eine in axialer Richtung auf die Ringdichtung wirkendes Druckmittel angeordnet ist.

Derartige Kabeleinführungsdichtungen sind ganz allgemein bekannt, so auch z.B. aus der europäischen Patentschrift EP 0 402 653 A2. Dort wird eine Kabeleinführungsdichtung aus verformbarem Material in Form eines ringförmigen Stopfens aus einem geschäumten Elastomer beschrieben, der in eine Kabeleinführungsöffnung in Form einer Hülse eines Gehäuses eingesetzt wird.

Aus US-A-4 255 614 ist eine konische Ringdichtung bekannt, die in eine angepaßte Einführungsöffnung einer zylindrischen, nicht geteilten Kabelgarnitur eingesetzt wird und die mit Hilfe einer druckerzeugenden Kappe komprimiert und so verformt wird, daß eine Dichtung zur Wandung der Kabelgarnitur einerseits und einem eingeführten Kabel andererseits erfolgt.

In der US-A-2 688 651 wird ebenfalls eine Ringdichtung beschrieben, die aus zwei gegenläufig konisch ausgebildeten Teildichtungen gebildet wird. Diese werden in angepaßte Kabeleinführungsöffnungen einer zylindrischen Kabelgarnitur eingesetzt. Mit Hilfe von schraubbaren Kappen erfolgt die Komprimierung und Abdichtung im zylindrisch geschlossenen Einführungsbereich der Kabelgarnitur.

Aus GB-A-724 596 ist eine Haubenmuffe bekannt, bei der eine axiale Kompression des Dichtungskörpers mittels einer Druckplatte mit Ansätzen vorgenommen wird, wobei die Ringdichtungen durch die Ansätze komprimiert werden.

Bei dem deutschen Gebrauchsmuster DE-U-76 07339 handelt es sich um eine Kabelmuffe, die einen Muffenhals aufweist, in dem das Dichtungssystem angeordnet ist. Es besteht aus einem Dichtungskeil, der mit Hilfe einer Ringmutter eingepreßt wird. Durch dieses Einpressen wird eine genügend kraftschlüssige Verbindung zwischen dem Kabelmantel und dem Muffenhals hergestellt.

Weiterhin sind auch Einführungsdichtungen für ungeschnittene Kabel in Form von sogenannten Grommets bzw. Gummibuchsen bekannt. Diese werden z.B. in vorgebohrten, geteilten Dichtungskörpern montiert, wobei die Teilungsebenen der Dichtungskörper mit zähplastischer Masse abgedichtet werden. Für nachträglich einzuführende, geschnittene Kabel werden einfache Verschraubungen in der Art der üblichen Stoffbuchsen verwendet. Bei derartigen Dichtungseinsätzen und Verschraubungsdichtungen ergeben sich jedoch mehrere Nachteile. So werden unter anderem verschiedene Techniken, d.h. Dichtungen mit elastischen Eigenschaften mit Dichtungen aus zähplastischem Material kombiniert. Hiermit ist der sich ergebende Federweg der verpreßten Gummiteile sehr klein, so daß keine bzw. kaum eine "gespeicherte Federkraft" für die dauerhafte Anpressung zur Verfügung steht. Dies führt auf Dauer zu Undichtigkeiten, besonders bei längerer zyklischer Temperaturbelastung. Der mit diesen Dichtungen zu überbrückende Kabeldurchmesserbereich ist relativ klein, so daß entsprechende Anpassungselemente nötig sind. Bei Nichtbelegung einer Einführungsöffnung muß jeweils ein Blindstopfen eingesetzt werden.

Aufgabe der vorliegenden Erfindung ist nun, eine Kabeleinführungsdichtung zu finden, mit der die vorgenannten Nachteile weitgehend behoben sind, wobei in erster Linie mit geringem Aufwand ein relativ großer Kabeldurchmesserbereich erfaßt werden soll, eine auf Dauer wirksame Nachspannfähigkeit gegeben sein muß und wobei hiermit die Dichtung so gestaltet sein muß, daß sie bei Demontage ohne Verletzung lösbar und wiederverwendbar ist.

Die gestellte Aufgabe wird nun mit einer Kabeleinführungsdichtung der eingangs beschriebenen Art dadurch gelöst, daß die Kabeleinführungsöffnung in der Trennebene einer längsgeteilten Kabelgarnitur oder deren Dichtungskörperteil angeordnet ist und die Schalen der geteilten Kabelgarnitur oder die Teilkörper eines Dichtungskörpers mittels Verschraubungen oder Rastverschlüssen gegeneinander gepreßt sind, wobei eine Zwischenlage aus Dichtungsmaterial, vorzugsweise einer Profildichtung, eingelegt ist.

Die Vorteile gemäß der Erfindung gegenüber dem Stand der Technik liegt in erster Linie darin, daß für die Abdichtung bei den Kabeleinführungen elastische, kegelförmige Ringdichtungen verwendet werden, die durch ein axial wirkendes Druckmittel innerhalb der ebenfalls kegelförmig ausgebildeten Kabeleinführungsöffnungen verpreßt werden. Durch die konische bzw. kegelige Ausbildung ergeben sich besonders gute Kräfteverhältnisse, die dazu führen, daß in einem weiten Bereich eine Anpressung auf das jeweils eingeführte Kabel erfolgt. Durch die axiale Verpressung ergibt sich eine relativ große Nachspannfähigkeit, die auf Dauer erhalten bleibt. Zusätzlich kann diese Federwirkung auch noch durch besondere, ringförmige Federeinsätze, die zwischen der Ringfläche am weiten Ende der Ringdichtung und dem ringförmig ausgebildeten Druckmittel einsetzbar sind, verstärkt werden. Die kegelförmige Ringdichtung ist vorzugsweise am engen Ende zunächst geschlossen als Kappe ausgebildet, so daß nicht belegte Kabeleinführungsöffnungen zunächst bei Einlage einer solchen Ringdichtung verschlossen sind. Zusätzliche Elemente werden somit nicht benötigt und bei Bedarf muß lediglich die Kappe abgeschnitten werden. Hierbei kann gleichzeitig in Folge der kegeligen Ausbildung durch Abschneiden an entsprechender Stelle eine Grobanpassung an den Durchmesser des einzuführenden Kabels erfolgen. Wird die kegelige Ringdichtung noch mit einem Längsschlitz versehen, so kann sie auch bei ungeschnittenen Kabeln eingesetzt werden, wobei dann jedoch auch die Kabeleinführungsebene der Kabelgarnitur geschnitten ausgebildet sein muß. Durch den axialen Anpreßdruck mit Hilfe des Druckmittels wird der Längsschlitz infolge des Kompressionsdruckes wieder verschlossen. Die Dichtwirkung in den Trennflächen wird erhöht, wenn die Ringdichtung mit geeigneten Fetten oder Ölen benetzt wird. Dadurch verringert sich die Reibung beim Einpressen und zusätzlich ist infolge der besseren Gleitfähigkeit eine bessere Füllung enger Spalten und Riefen möglich.

Eine derartige Kabeleinführungsdichtung gemäß der Erfindung läßt sich in jeder Art von Muffe verwenden, wenn die erforderlichen Gegenflächen entsprechend konisch ausgebildet sind. So muß die Kabeleinführungsöffnung eine der Ringdichtung angepaßte konische bzw. kegelige Ausbildung aufweisen, so daß diese entlang dieser Konusfläche eingepreßt werden kann. Eine solche Ausbildung kann sowohl bei geteilten wie auch bei ungeteilten Kabeleinführungsbereichen erfolgen. Auch ist eine Kombination möglich, d.h. innerhalb eines Kabeleinführungsbereiches, z.B. in der Stirnfläche eines Dichtungskörpers einer Muffe, können sowohl geteilte wie auch ungeteilte Kabeleinführungsöffnungen angeordnet sein. Auf diese Weise können in einem solchen Einführungsbereich geschnittene und ungeschnittene Kabel eingeführt werden.

Die kegeligen Kabeleinführungen sind vorzugsweise so gestaltet, daß das weite Ende sich im Inneren der Kabelgarnitur befindet und das enge Ende auf die Außenseite zuweist, wodurch der Anpreßbereich im Inneren der Muffe ebenfalls geschützt ist.

Zweckmäßigerweise sind die Kabeleinführungsöffnungen als überstehende Stutzen ausgebildet und zwar mit einer solchen Länge, daß die eingeführten Kabel bei Biegebelastungen an den freien Enden der Stutzen abgestützt werden. Dadurch werden besonders die Querkräfte vom Bereich der Kabeleinführungsdichtung ferngehalten.

Bei geteilten Kabeleinführungen wird die Problematik der Abdichtung zwischen der Ringdichtung und der Profildichtung der Trennebene dadurch gelöst, daß die Profildichtung und die Ringdichtung, insbesondere eine mit einer seitlich angeformten Rippe, in einer gemeinsamen und parallel zur Kegelform verlaufenden Nut zusammengepreßt werden.

Bei Einführungen in geteilten Einführungsbereichen muß nicht nur die Ringdichtung sondern auch das Druckmittel in Längsrichtung geteilt sein, damit sie auf ein ungeschnittenes Kabel aufsetzbar sind. Nach dem Aufsetzen müssen die Ringdichtung und das Druckmittel wieder ringförmig zusammengeschlossen sein. So kann beispielsweise eine ringförmige Druckschraube aus zwei Halbteilen bestehen, die über ein Filmscharnier, Rast- oder Führungsnocken miteinander verbunden sind.

Die Halbschalen einer Kabelmuffe oder eines Dichtungskörpers aus zwei Hälften, wie sie ebenfalls verwendet werden können, werden in an sich bekannter Weise gegeneinander gepreßt, wobei die gegenseitige Abdichtung mit einer Profildichtung erfolgt.

Die Montage mit einer Kabeleinführungsdichtung gemäß der Erfindung erfolgt in nachstehenden Schritten:
1) Zusammenführung der einzelnen Muffenteile
2) Anpassung der Ringdichtung an den Durchmesser des einzuführenden Kabels, wobei der Innendurchmesser etwa gleich dem Kabeldurchmesser ist
3) Kabel entweder durch die Öffnung der Ringdichtung oder gegebenenfalls durch den Längsschlitz der Ringdichtung einsetzen
4) Druckmittel aufsetzen und in axialer Richtung zur Anpressung der Ringdichtung einschrauben
5) Muffenzylinder schließen.

Die Erfindung wird nun anhand von sechs Figuren näher erläutert.
- Figur 1: zeigt einen geteilten Dichtungskörper mit einer eingesetzten Kabeleinführungsdichtung in perspektivischer Ansicht.
- Figur 2: zeigt eine Ansicht der Kabeleinführungsdichtung in der Trennebene des Dichtungskörpers nach Figur 1.
- Figur 3: zeigt die Ringdichtung in Frontansicht.
- Figur 4: zeigt den Einsatz einer erfindungsgemäßen Ringdichtung in einem Kabeleinführungsstutzen einer Kabelmuffe.
- Figur 5: zeigt einen Schnitt durch die Kabeleinführungsöffnung des Ausführungsbeispiels nach Figur 5.
- Figur 6: zeigt eine Variante für ein Druckmittel der Kabeleinführungsdichtung.

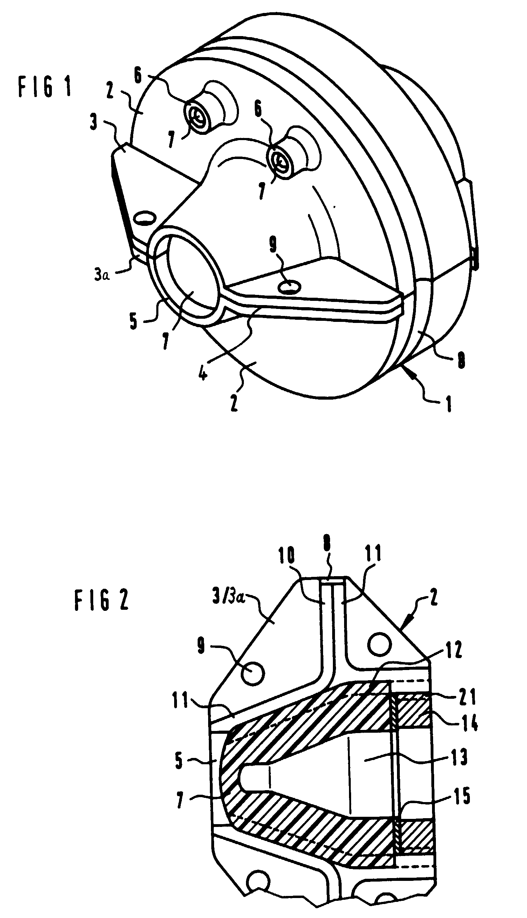

In Figur 1 ist als Ausführungsbeispiel für einen Kabeleinführungsbereich ein Dichtungskörper 1 gezeigt, der an der Stirnseite eines Muffenrohres einsetzbar ist. Dieser Dichtungskörper 1 ist in der Trennebene 4 längsgeteilt, so daß er auch bei der Einführung von ungeschnittenen Kabeln verwendet werden kann. In dieser Trennebene 4 ist eine Kabeleinführungsöffnung 5 eingeformt, wobei diese stutzenförmig aus der Frontseite des Dichtungskörpers 1 hervorsteht. In dieser stutzenförmigen Kabeleinführungsöffnung 5 ist die kegelige, frontseitig noch geschlossene Ringdichtung 7 erkennbar. Mit Hilfe der angeformten Flansche 3 und 3a und mittels Klemmschrauben in den Bohrungen 9 werden die Dichtungskörperhälften 2 zusammengepreßt. Außerdem ist angedeutet, daß in diesem Dichtungskörper 1 noch zusätzlich Kabeleinführungsöffnungen 6 angeordnet sein können, durch die nur geschnittene Kabel eingeführt werden können, da sie nicht längsgeteilt sind. Auch hier sind die eingesetzten Ringdichtungen 7 erkennbar. Es ist auch möglich, daß in der Trennebene 4 mehrere Kabeleinführungen vorgesehen werden. Über den Dichtungskörper 1 wird ein Muffenrohr aufgeklemmt, wobei zur Abdichtung in die Dichtungsnut 8 eine Dichtungseinlage eingelegt wird.

Die Figur 2 verdeutlicht nun die Anordnung der konusförmigen Ringdichtung 7, die in einer geteilten konusförmig ausgebildeten und geteilten Kabeleinführungsöffnung 5 eingesetzt ist. In der hier dargestellten Trennebene sind die Flansche 3 bzw. 3a zu sehen, wobei in einer gemeinsamen, auch parallel zur Kegelform der Ringdichtung 7 verlaufenden Dichtungsnut 11 die Profildichtung 10 mit der Ringdichtung 7, vorzugsweise jedoch einer angesetzten Rippe 12, miteinander dicht verpreßt werden. Hier ist die Ringdichtung 7 noch als kappenförmig geschlossenes Formteil dargestellt, wobei bei Bedarf entsprechend des Durchmesserers des einzuführenden Kabels der Abschnitt an der dem Kabeldurchmesser entsprechenden Stelle erfolgt. Am weiten Ende der konischen Ausbildung ist z.B. ein Gewinde 21 eingeschnitten, in welches das Druckmittel, z.B. hier in Form einer Ringmutter 14, einschraubbar ist. Zusätzlich ist zur Ringdichtung 7 und der Ringmutter 14 ein Druckfedereinsatz 15 eingeführt, der zur Aufrechterhaltung eines bestimmten Anpreßdruckes dient. Durch das Eindrehen der Ringmutter 14 wird die Ringdichtung 7 axial gegen die konische Ringfläche der Kabeleinführungsöffnung gepreßt, wodurch die Abdichtung erfolgt. Wenn ein Kabel eingeführt ist, wird die Ringdichtung 7 auch gleichzeitig gegen das eingeführte Kabel gepreßt, wodurch die Abdichtung gewährleistet wird. Ein eventuell vorhandener Längsschlitz in der Ringdichtung wird ebenfalls so verpreßt, daß die nötige Abdichtung erfolgt.

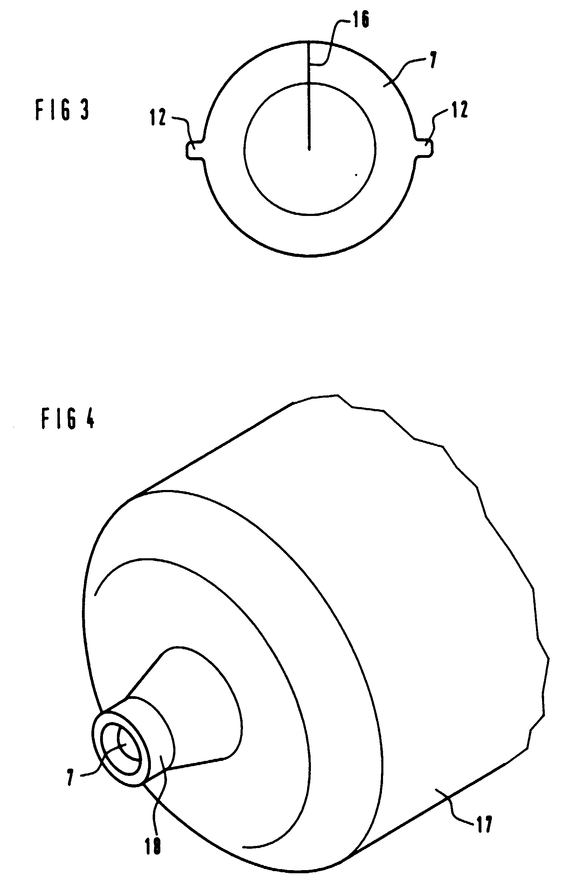

Die Figur 3 zeigt eine konisch ausgebildete Ringdichtung 7 in Frontansicht, wobei hier zusätzlich seitliche Rippen 12 angeformt sind, die zur Abdichtung gegen die Profildichtungen der Längsabdichtung der Kabelmuffe bzw. des Dichtungskörpers dienen. Außerdem ist ersichtlich, daß die Ringdichtung 7 einen Längsschlitz 16 aufweist, so daß diese Ringdichtung 7 auch bei ungeschnittenen Kabeln eingesetzt werden kann.

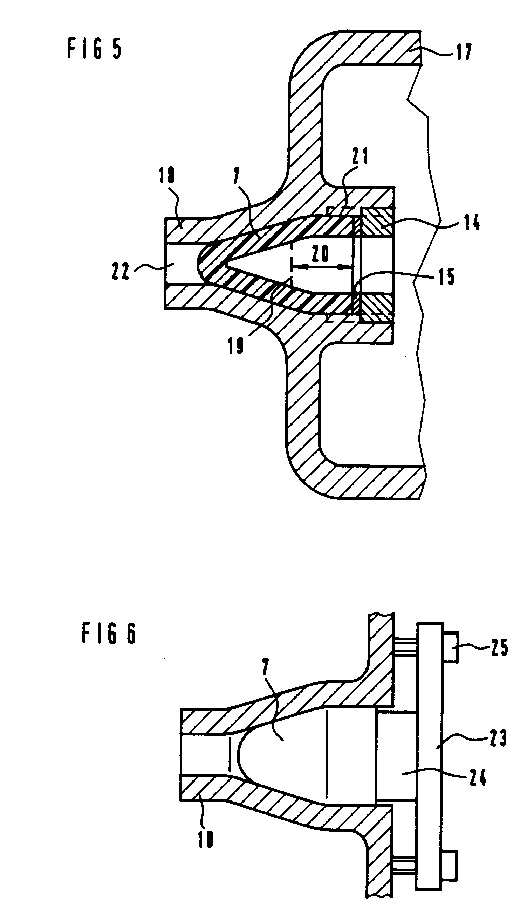

Figur 4 zeigt das eine Ringdichtung 7 gemäß der Erfindung auch bei ungeschnittenen Einführungsbereichen einer Kabelmuffe 17 eingesetzt werden können, wobei diese den bereits in Figur 1 beschriebenen Kabeleinführungen 6 entspricht. Hier ist diese Kabeleinführung als Stutzen 18 ausgebildet, der solange ist, daß sich ein eingeführtes Kabel bei Biegebelastung am äußersten Ringende abstützen kann. Dadurch werden die Biegebelastungen von dem Dichtungsbereich abgehalten.

Die Figur 5 verdeutlicht nun in einem Querschnitt die Ausführungen nach Figur 4, wobei hieraus die bereits beschriebenen Verhältnisse wieder erkennbar sind. Die kegelig und kappenförmig ausgebildete Ringdichtung 7 ist in der kegelförmigen Kabeleinführungsöffnung 22 mit Hilfe einer ringförmigen Druckmutter 14 eingepreßt. Außerdem ist angedeutet, daß durch das Einpressen eine Federkraftspeicherung des Materials im Bereich 20 möglich ist. Die Linie 19 gibt an, daß die Ringdichtung 7 bis hierhin abgeschnitten werden kann; die entspricht dem maximal einführbaren Kabeldurchmesser.

In Figur 6 wird schließlich gezeigt, daß auch andere Druckmittel einsetzbar sind, so z.B. eine Druckplatte 23, die geteilt sein kann und die mittels Schrauben 25 gegen die Ringdichtung 7 einpreßbar ist. Ein Ansatz 24 ermöglicht dabei eine bessere Führung innerhalb der Kabeleinführungsöffnung. Auch hier können Druckfedereinsätze eingesetzt werden, wie oben bereits beschrieben wurde. Durch dieses Beispiel soll verdeutlicht werden, daß auch andere Ausführungsbeispiele denkbar sind, mit denen die gleiche Wirkungsweise erreicht werden kann.

## Patentansprüche

1. Kabeleinführungsdichtung, bestehend aus einer Ringdichtung (7) aus elastischem Material und einer dafür angepaßten Einführungsöffnung (5,22) im Kabeleinführungsbereich einer Kabelgarnitur, wobei die Kabeleinführungsöffnung (5, 22) konisch zulaufend ausgebildet ist, die Ringdichtung (7) zumindest auf der Außenseite dem konischen Verlauf der Kabeleinführungsöffnung (5, 22) angepaßt ist und am weiten Ende der Kabeleinführungsöffnung (5, 22) ein in axialer Richtung auf die Ringdichtung (7) wirkendes Druckmittel (14, 23) angeordnet ist,
**dadurch gekennzeichnet,**
daß die Kabeleinführungsöffnung (5) in der Trennebene (4) einer längsgeteilten Kabelgarnitur oder deren Dichtungskörperteil (1) angeordnet ist und daß die Schalen (2) der geteilten Kabelgarnitur oder die Teilkörper eines Dichtungskörpers (1) mittels Verschraubungen oder Rastverschlüssen gegeneinander gepreßt sind, wobei eine Zwischenlage aus Dichtungsmaterial, vorzugsweise einer Profildichtung (10), eingelegt ist.

2. Kabeleinführungsdichtung nach Anspruch 1,
**dadurch gekennzeichnet,**
daß das Druckmittel eine Ringmutter (14) ist, die axial in ein Gewinde (21) am weiten Ende der Kabeleinführungsöffnung (5, 22) einschraubbar ist.

3. Kabeleinführungsdichtung nach Anspruch 1,
**dadurch gekennzeichnet,**
daß das Druckmittel durch eine Druckplatte (23) gebildet ist, die mit einem Ansatz (24) versehen ist und damit in das weite Ende der Kabeleinführungsöffnung (5, 22) axial auf die Ringdichtung (7) wirkend einpreßbar ist.

4. Kabeleinführungsdichtung nach einem der vorhergehenden Ansprüche,
**dadurch gekennzeichnet,**
daß mindestens eine Kabeleinführungsöffnung (6) außerhalb der Trennebene (4) einer längsgeteilten Kabelgarnitur oder deren Dichtungskörperteil (1) angeordnet ist.

5. Kabeleinführungsdichtung nach einem der vorhergehenden Ansprüche,
**dadurch gekennzeichnet,**
daß die Ringdichtung (7) aus Gummi, vorzugsweise Silikongummi, besteht.

6. Kabeleinführungsdichtung nach einem der vorhergehenden Ansprüche,
**dadurch gekennzeichnet,**
daß die Ringdichtung (7) am konisch auslaufenden Ende kappenförmig abgeschlossen ist.

7. Kabeleinführungsdichtung nach einem der vorhergehenden Ansprüche,
**dadurch gekennzeichnet,**
daß die Ringdichtung (7) längsgeteilt oder längsgeschlitzt ist.

8. Kabeleinführungsdichtung nach einem der vorhergehenden Ansprüche,
**dadurch gekennzeichnet,**
daß zwischen der Ringfläche am weiten Ende der Ringdichtung (7) und dem Druckmittel (14, 23 - 24) eine ringförmige Scheibe eingefügt ist.

9. Kabeleinführungsdichtung nach einem der vorhergehenden Ansprüche,
**dadurch gekennzeichnet,**
daß zwischen der Ringfläche am weiten Ende der Ringdichtung (7) und dem Druckmittel (14, 23 - 24) ein Druckfedereinsatz (15) angeordnet ist.

10. Kabeleinführungsdichtung nach einem der vorhergehenden Ansprüche,
**dadurch gekennzeichnet,**
daß die Kabeleinführungsöffnung am äußeren Ende der Kabelgarnitur stutzenförmig als Kabelabstützung (18) vorgezogen ist.

11. Kabeleinführungsdichtung nach einem der vorhergehenden Ansprüche,
**dadurch gekennzeichnet,**
daß das Druckmittel (14) aus zwei längsgeteilten Hälften besteht, die über Fixiermittel, vorzugsweise Filmscharnier, Rast- oder Führungnocken miteinander fixierbar sind.

12. Kabeleinführungsdichtung nach einem der vorhergehenden Ansprüche,
**dadurch gekennzeichnet,**
daß die Oberflächen der Ringdichtung mit Fett oder Öl benetzt sind.

13. Kabeleinführungsdichtung nach einem der vorhergehenden Ansprüche,
**dadurch gekennzeichnet,**
daß die Konus- bzw. Kegelausbildungen der Kabeleinführungsöffnungen (5, 22) und der Ringdichtung (7) nach auswärts verjüngend verlaufen.

14. Kabeleinführungsdichtung nach einem der vorhergehenden Ansprüche,
**dadurch gekennzeichnet,**
daß eine gemeinsame Dichtungsnut (11) in der Trennebene (4) einer längsgeteilten Kabelgarnitur oder deren Dichtungskörper (1) angeordnet ist, in der die Profildichtung (10) der Trennebene (4) und die Ringdichtung (7), vorzugsweise mit einer angeformten Rippe (12), dicht zusammengepreßt sind.

## Claims

1. Cable inlet seal, comprising an annular seal (7), made from an elastic material, and an inlet opening (5, 22), adapted thereto, in the cable inlet region of a cable accessory, the cable inlet opening (5, 22) being constructed in a conically converging fashion, the annular seal (7) being adapted at least on the outside to the conical course of the cable inlet opening (5, 22), and a pressure means (14, 23) acting in the axial direction on the annular seal (7) being arranged at the wide end of the cable inlet opening (5, 22), characterized in that the cable inlet opening (5) is arranged in the parting plane (4) of a longitudinally split cable accessory or the sealing member (1) of the latter, and in that the shells (2) of the split cable accessory or the submembers of a sealing member (1) are pressed against one another by means of screws or latching closures, an interlayer made from sealing material, preferably a profiled seal (10), being inserted.

2. Cable inlet seal according to Claim 1, characterized in that the pressure means is a ring nut (14) which can be screwed axially into a thread (21) at the wide end of the cable inlet opening (5, 22).

3. Cable inlet seal according to Claim 1, characterized in that the pressure means is formed by a pressure plate (23) which is provided with a projection (24) and can thereby be pressed into the wide end of the cable inlet opening (5, 22) in a fashion acting axially on the annular seal (7).

4. Cable inlet seal according to one of the preceding claims, characterized in that at least one cable inlet opening (6) is arranged outside the parting plane (4) of a longitudinally split cable accessory or the sealing member (1) of the latter.

5. Cable inlet seal according to one of the preceding claims, characterized in that the annular seal (7) consists of rubber, preferably silicone rubber.

6. Cable inlet seal according to one of the preceding claims, characterized in that the annular seal (7) is sealed like a cap at the conically tapering end.

7. Cable inlet seal according to one of the preceding claims, characterized in that the annular seal (7) is longitudinally split or longitudinally slit.

8. Cable inlet seal according to one of the preceding claims, characterized in that an annular washer is inserted between the annular surface at the wide end of the annular seal (7) and the pressure means (14, 23-24).

9. Cable inlet seal according to one of the preceding claims, characterized in that a pressure spring insert (15) is arranged between the annular surface at the wide end of the annular seal (7) and the pressure means (14, 23-24).

10. Cable inlet seal according to one of the preceding claims, characterized in that the cable inlet opening is drawn forward like a stub as a cable support (18) at the outer end of the cable accessory.

11. Cable inlet seal according to one of the preceding claims, characterized in that the pressure means (14) comprises two longitudinally split halves which can be fixed to one another via fixing means, preferably a film hinge, latching cams or guide cams.

12. Cable inlet seal according to one of the preceding claims, characterized in that the surfaces of the annular seal are moistened with fat or oil.

13. Cable inlet seal according to one of the preceding claims, characterized in that the conical formations of the cable inlet openings (5, 22) and of the annular seal (7) extend outwardly in a tapering fashion.

14. Cable inlet seal according to one of the preceding claims, characterized in that a common sealing groove (11) is arranged in the parting plane (4) of a longitudinally split cable accessory or sealing memeber (1) of the latter, in which groove the profiled seal (10) of the parting plane (4) and the annular seal (7), preferably with an integrally formed rib (12) are pressed tightly together.

## Revendications

1. Dispositif d'étanchéité d'entrée de câble, constitué d'une garniture (7) d'étanchéité annulaire en matériau élastique et d'une ouverture (5, 22) d'introduction qui y est adaptée et qui est située dans la zone d'introduction de câble d'une monture de câble, l'ouverture (5, 22) d'introduction de câble se terminant en cône, la garniture (7) d'étanchéité annulaire étant adaptée au moins du côté extérieur à la forme conique de l'ouverture (5, 22) d'introduction de câble, et un moyen (14, 23) pour exercer une pression, agissant dans la direction axiale sur la garniture (7) d'étanchéité annulaire, étant monté à l'extrémité large de l'ouverture (5, 22) d'introduction de câble, caractérisé en ce que l'ouverture (5, 22) d'introduction de câble est ménagée dans le plan (4) de joint d'une monture de câble fendue longitudinalement ou de sa pièce (1) formant bloc d'étanchéité et que les coquilles (2) de la monture de câble fendue, ou les éléments partiels d'un bloc (1) d'étanchéité, sont pressées l'une sur l'autre au moyen de vissages ou de fermetures à encliquetage, une pièce intermédiaire en matériau d'étanchéité, de préférence une garniture (10) d'étanchéité profilée, étant insérée.

2. Dispositif d'étanchéité d'entrée de câble suivant la revendication 1, caractérisé en ce que le moyen pour exercer une pression est un écrou (14) de serrage, qui peut être vissé axialement dans un taraudage (21) situé à l'extrémité large de l'ouverture (5, 22) d'introduction de câble.

3. Dispositif d'étanchéité d'entrée de câble suivant la revendication 1, caractérisé en ce que le moyen pour exercer une pression est formé par une plaque (23) d'application d'une pression, qui est munie d'un épaulement (24) et qui peut ainsi être enfoncée dans l'extrémité large de l'ouverture (5, 22) d'introduction de câble en agissant axialement sur la garniture (7) d'étanchéité annulaire.

4. Dispositif d'étanchéité d'entrée de câble suivant l'une des revendications précédentes, caractérisé en ce qu'il est ménagé au moins une ouverture (6) d'introduction de câble à l'extérieur du plan (4) de joint d'une monture de câble fendue ou de sa pièce (1) formant bloc d'étanchéité.

5. Dispositif d'étanchéité d'entrée de câble suivant l'une des revendications précédentes, caractérisé en ce que la garniture (7) d'étanchéité annulaire est en caoutchouc, de préférence en caoutchouc silicone.

6. Dispositif d'étanchéité d'entrée de câble suivant l'une des revendications précédentes, caractérisé en ce que la garniture (7) d'étanchéité annulaire est fermée en forme de chapeau à l'extrémité se terminant en cône.

7. Dispositif d'étanchéité d'entrée de câble suivant l'une des revendications précédentes, caractérisé en ce que la garniture (7) d'étanchéité annulaire est découpée longitudinalement ou fendue longitudinalement.

8. Dispositif d'étanchéité d'entrée de câble suivant l'une des revendications précédentes, caractérisé en ce qu'il est inséré un disque annulaire entre la surface annulaire située à l'extrémité large de la garniture (7) d'étanchéité annulaire et le moyen (14, 23 - 24) pour exercer une pression.

9. Dispositif d'étanchéité d'entrée de câble suivant l'une des revendications précédentes, caractérisé en ce qu'il est inséré un insert (15) formant ressort de pression entre la surface annulaire située à l'extrémité large de la garniture (7) d'étanchéité annulaire et le moyen (14, 23 - 24) pour exercer une pression.

10. Dispositif d'étanchéité d'entrée de câble suivant l'une des revendications précédentes, caractérisé en ce que, à l'extrémité extérieure de la monture de câble, l'ouverture d'introduction de câble est étirée en forme d'embout servant d'appui (18) au câble.

11. Dispositif d'étanchéité d'entrée de câble suivant l'une des revendications précédentes, caractérisé en ce que le moyen (14) pour exercer une pression est constitué de deux moitiés fendues longitudinalement, qui peuvent être fixées l'une à l'autre par l'intermédiaire de moyens de fixation, de préférence une charnière pelliculaire, des ergots d'encliquetage et de guidage.

12. Dispositif d'étanchéité d'entrée de câble suivant l'une des revendications précédentes, caractérisé en ce que les surfaces de la garniture d'étanchéité annulaire sont mouillées par de la graisse ou de l'huile.

13. Dispositif d'étanchéité d'entrée de câble suivant l'une des revendications précédentes, caractérisé en ce que les conformations en cône ou en cône tronqué des ouvertures (5, 22) d'introduction de câble et de la garniture (7) d'étanchéité annulaire se rétrécissent vers l'extérieur.

14. Dispositif d'étanchéité d'entrée de câble suivant l'une des revendications précédentes, caractérisé en ce qu'il est ménagé dans le plan de joint d'une monture de câble fendue longitudinalement ou de son bloc (1) d'étanchéité une rainure (11) d'étanchéité commune, dans laquelle la garniture (10) d'étanchéité profilée du plan (4) de joint et la garniture (7) d'étanchéité annulaire, comportant de préférence une nervure (12) qui en est issue, sont comprimées l'une avec l'autre de manière étanche.
